# EUROPEAN PATENT SPECIFICATION

(11) **EP 0 876 530 B1**
(45) Date of publication and mention of the grant of the patent: **23.08.2000**
(21) Application number: 96939202.6
(22) Date of filing: 22.11.1996
(51) Int. Cl.: D06N 1/00, B32B 5/02

(54) **LINOLEUM FLOOR-COVERING**
LINOLEUM BODENBELAG
REVETEMENT DE SOL EN LINOLEUM

(30) Priority: 23.11.1995 GB 9524005
(43) Date of publication of application: 11.11.1998
(73) Proprietor: FORBO International S.A., 8193 Eglisau/Zürich (CH)
(72) Inventor: ROGERS, Edward Harris, Burntisland, Fife KY3 9JL (GB)
(74) Representative: Szczuka, Jan Tymoteusz
(86) International application number: GB9602886
(87) International publication number: WO9719219

(56) References cited:
- EP-A- 0 074 681
- DE-C- 395 706
- US-A- 1 348 571
- US-A- 2 894 560

## Description

The present invention relates to the manufacture of floor-coverings, and more particularly to the manufacture of linoleum floor-coverings.

Conventionally linoleum is manufactured from a substrate consisting of jute fabric, on which a hot plastic mass of oxidised linseed oil, and rosin, organic and inorganic fillers and pigments and, as the case may be, further additives, is calendered. The web thus obtained is introduced into a drying chamber in which it is suspended in loops at a temperature of around 80°C, and the upper layer is allowed to cure or set therein by oxidative uptake of atmospheric oxygen to provide a suitably tough, flexible wearing surface. After leaving the drying chamber, the web is cut to the required length, and is wound on rolls.

In common with many floor-covering materials based on this type of construction, where a wear resistant surface is applied to a "carrier" backing, difficulties of dimensional stability and curling of sheets when cut for installation are encountered. This is due to differential stresses being introduced to the component layers during manufacture, or on exposure to differing ambient conditions in the use of floor-covering. As linoleum employs substances in its production such as woodflour and cork, which are sensitive to differing moisture levels in the environment, problems of curl and dimensional stability can be particularly troublesome.

Whilst the above may not present a problem where traditional linoleum in sheet form is intended to be stuck overall to the floor, using suitable adhesives, which restrain the material from further movement from its installed dimensions, where tiles are cut from traditional linoleum these can change significantly in dimension between production and installation. Traditional linoleum is therefore unsuitable as the basis for cutting linoleum tiles, which have to be packaged and stored before final use. This particular problem was recognised and addressed by European Patent 0 074 681 B2 of Forbo-Krommenie BV, which specifies a carrier or substrate in the form of an open mesh woven fabric which endows the material with acceptable dimensional stability. The construction specified in patent 0 074 681 B2 1982 is however still essentially heterogeneous or "unbalanced" so that differential stresses in the layers can still lead to unacceptable curling. Complex and rigid control measures are therefore needed in the manufacturing process in order to ensure the production of an acceptable product.

Linoleum tiles must therefore be produced on a different carrier (usually more expensive) to material produced in sheet form when the process outlined in European Patent 0 074 681 B2 is employed. Processing methods also differ for these two types of products. This leads to production complexity and costs, and additional inventory costs, when a manufacturer wishes to offer both tiles and sheet material to the market place. Moreover traditional linoleum must be stuck overall to the sub floor due to its inherent dimensional instability in order to prevent dimensional change leading to bulging, seam "gapping", curling etc. in use.

DE-C-395706 discloses a linoleum floor-covering which can have a layer of cured linoleum composition provided at both sides of the carrier. In this known floor covering, a synthetic organic polymer resin called cupren which is an acetylene condensation product, is used as a substitute for the traditional wood floor filler in the linoleum composition, in order to avoid moisture absorption by a wood floor filler and rotting thereof. The use of such a synthetic organic polymer is, however, unacceptable in a natural linoleum floor-covering product.

It is an object of the present invention to avoid or minimise one or more of the above disadvantages.

It has now been found that the dimensional stability and resistance to curl of linoleum floor coverings can be substantially improved by the application of a linoleum composition to both sides of the carrier or substrate in the course of manufacture of the floor covering.

Thus the present invention provides a method of manufacture of a linoleum floor covering comprising the steps of
providing a carrier;
applying a first layer of a linoleum composition at a first side of said carrier;
applying a second layer of a linoleum composition at a second side of said carrier; and
curing said first and second layers of linoleum composition so as to form a composite sheet in which said first and second layers are bonded together, wherein the linoleum composition comprises an oxidised polyunsaturated oil, an organic filler and/or inorganic filler, and optionally a pigment, wherein no cupren is present in said linoleum composition.

In another aspect the present invention provides a linoleum floor-covering comprising a carrier and a layer of cured linoleum composition adherently attached at one side of the said carrier, and a second layer of cured linoleum composition adherently at the other side of said carrier wherein the linoleum composition comprises an oxidised polyunsaturated oil, an organic filler and/or inorganic filler, and optionally a pigment, wherein no cupren is present in said linoleum composition.

Thus by means of the present invention there is provided a linoleum floor-covering with substantially greater dimensional stability than previously known linoleum floor-coverings thereby allowing them to be laid with only limited securing e.g. at seams and doorways, without the need for gluing of the whole area. The material may moreover be cut into dimensionally stable tiles thereby facilitating DIY installation by non-specialist personnel and other applications.

The linoleum compositions used in the first and second layers of the floor coverings of the present invention are generally similar to those used in conventional linoleum floor coverings. Thus in general each of the first and second layers comprises a "cement" (polymeric component) and cork and/or wood flour and/or an inorganic filler, and if desired a pigment. The cement comprises a so-called drying oil, which is a polyunsaturated oil such as linseed oil, fish oil, soya oil etc. which can be oxidised by atmospheric oxygen to form a dry solid, with linseed oil being particularly preferred because of its faster drying characteristics. Additional ingredients such as rosin may be included in the cement in order to improve the strength of the cement and the wear characteristics of the final floor covering layer compositions.

The first and second layers may be substantially similar, and desirably are of a generally comparable thickness and composition so as to provide a balanced resistance to curl or other dimensional distortion at both sides of the product. Nevertheless it may be desirable to have differences, for example, for reasons of economy the lower side layer may have a greater filler content whilst the composition of the upper side layer may be optimized for greater wear resistance by generally known means such as modifying the composition. Where there are differences between the layers then these are desirably implemented in a combination of parameters (e.g. thickness and composition so that the stresses are balanced in the final cured material. In most cases though it is possible to use more or less identical first and second layers e.g. for manufacturing convenience.

Where it is desired to use substantially different compositions in the first and second layers e.g. to provide distinct top (wear) and lower layers, then the "balancing" of these, most conveniently by means of adjustment of their relative thickness in the final floor-covering, may be carried out by simple trial and error - as with other laminated multi-layer sheet materials.

It will also be appreciated that the overall thickness of the product may be varied similarly to conventional floor-coverings with smaller thicknesses e.g. 2mm being used for lighter wear applications and greater thicknesses such as 2.5 and 3.2mm being used for more critical applications. Thus in general the floor-coverings of the invention can have overall thickness of from 1 to 6mm, preferably from 1.5 to 4mm.

Various kinds of carrier may be used in the floor-coverings of the invention including woven and non-woven fabrics, of natural and synthetic material. Thus the carrier may be of jute as in traditional linoleum floor-coverings or other natural fibre such as cotton and sisal. There may also be used synthetic fibres such as polyester, polyamide, polyacrylate, glassfibre etc. Preferably the carrier is of a more or less open structure and/or substantially porous material so as to facilitate penetration of the linoleum compositions through the carrier layer to assist in bonding thereof to the carrier and/or to each other, and to encapsulate more fully the carrier. In order to enhance bonding of the linoleum layers to the carrier, the latter may be provided with an adhesive coating which may be based on a natural drying oil such as linseed oil or soya oil or similar, or it may be based on a synthetic material such as acrylic, styrene butadiene rubber or similar.

The linoleum compositions may be applied to the carrier using known procedures. Thus a hot thermoplastic linoleum composition, which generally comprises a mixture of oxidised linseed oil and resin, organic and/or inorganic fillers such as woodflour and chalk powder, and pigments as required, and may conveniently be formed into granules or the like, is generally formed into a sheet by extrusion using slot extruder or by pressing using a calendar, belt or band press, laminating press or a static press means. Sheets formed of linoleum composition so formed may then be applied to opposite sides of the carrier, usually separately, but if desired, simultaneously. As noted before the sheets at opposite side of the carrier may be of similar or different form and composition.

The composite multi-layer structure of carrier and "green" (or uncured) linoleum composition is then cured. This may be carried out in generally conventional manner by hanging in loops in a heated chamber, e.g. at about 80°C, until curing has been completed. This may typically take from 2 to 4 weeks, i.e. a similar time or possibly shorter, than with conventional linoleum floor-coverings. Completion of curing may be readily determined in known manner by monitoring the physical characteristics such as for example indent resistance of samples of the floor-covering at convenient intervals.

The outer surfaces of the upper and/or lower linoleum layers may be plain or may be decorated by known linoleum production techniques to give a marble, or granite, or jaspé, or moiré appearance, or they may be decorated by any other suitable technique. Thus for example granules of two or more, more or less identical, compositions but with different colours may be blended prior to formation of the granules into a sheet form. Also two or more intermediate form sheets may be processed e.g. calendered together so as to form a final, first or second, layer sheet. Either or both surfaces of the floor-covering material may moreover be smooth or textured e.g. embossed in generally known manner.

Further preferred features and advantages of the invention will appear from the following detailed examples given by way of illustration together with the accompanying drawings in which:
Fig. 1 is a schematic representation of one embodiment of a production process of the invention; and
Fig. 2 is a cross-section of one embodiment of a linoleum floor-covering of the invention.

### Example 1. Production of Linoleum Floor-Covering

### A. First Layer Linoleum Composition

A linoleum composition was prepared in conventional manner by mixing ingredients listed below in a 'Banbury' type internal batch mixer for 6 minutes at a temperature of 80°C to produce a thick pasty mass having the following composition:

| | % w/w |
|---|---|
| Oxidised Linseed Oil | 40 |
| Woodflour | 40 |
| Chalk Powder | 15 |
| Pigments | 5 |

The mass was then formed into granules by passing through a dicing machine.

### B. Second Layer Linoleum Composition

This was identical to the first layer.

### C. Application of Linoleum Compositions to Carrier

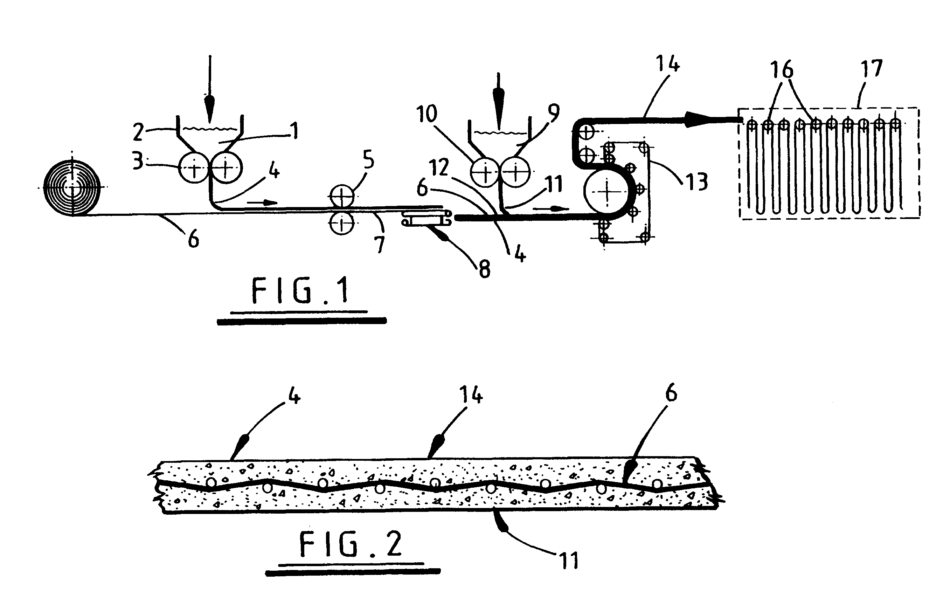

As shown in Fig. 1, the first layer composition 1 is fed from a first hopper 2 at a temperature of about 50°C into the nip of a first calendar 3 to form a first layer sheet 4 having a thickness of about 1.25mm. The latter is then passed through the nip of a first laminating press 5 together with a carrier web 6. The latter comprises a woven polyester mesh having typically a specification as follows:

| | |
|---|---|
| Weight | 25g/m² |
| Sett | 2/29x20 thd/dm |
| Warp | 135 denier (150 dtex) MF Polyester |
| Weft | 450 denier (500 dtex) MF Polyester |
| "thd/dm" means thread per decimetre. "dtex" is a measurement of thread weight. The specification refers to the weight per thousand metres of thread. "MF" means multi filament | |

The composite first layer/carrier 7 is then inverted by passing through a suitable arrangement of carrier rollers 8. The second layer composition 9 is fed to a second calender 10, to form a second layer sheet 11, having a thickness of about 1.25 mm, which is then applied to the opposite surface 12 of the carrier 6 to the first layer 4, before being passed through a second laminating press in the form of a belt press 13, together with the previously formed first layer/carrier laminate, to form a composite sheet 14 having an overall thickness of about 2.5 mm.

The green composite sheet 14 is then hung out over support bars 16 in a conventional curing chamber 17 wherein it is maintained at a temperature of about 80°C until it is cured - typically after a few weeks.

It will be appreciated that in the abovedescribed example instead of a batch-type mixer there could be used a continuous mixer, various forms of which are well-known in the art.

### Example 2. Properties of Linoleum Floor-Covering

The floor-covering produced in Example 1 was found to be highly flexible, being bendable without breaking around a radius of 25mm at either side (i.e. base or wear side) (tested in accordance with prEN 669). Sheets which had been cut into tiles (500mm x 500mm) were found to maintain their length and breadth dimensions to within 0.1% when tested according to EN435 method A.

### Example 3. Production of Linoleum Floor-Covering

### A. Top (Wear) Layer Linoleum Composition

This was substantially similar to that used in example 1A except that the "oxidised linseed oil" component (commonly referred to in the industry as "cement" or "linoleum cement") included a small amount of tall oil for reasons of economy and some rosin to improve the wearing properties of the final layer composition, as follows:

| Top Layer Cement | % w/w |
|---|---|
| Linseed Oil | 75 |
| Tall Oil | 15 |
| Rosin | 10 |

The cement was prepared in generally well known manner by mixing together the above components at a temperature of the order of 80 to 110°C for some 20 to 30 hours in a temperature controlled vessel while the mixture was continuously aerated.

The cement was then mixed with the other top layer components and formed into granules in the same way and proportions as in Example 1A.

### B. Lower Layer Linoleum Composition

In this case there was used a cement with the following composition:

| Lower Layer Cement | % w/w |
|---|---|
| Linseed Oil | 60 |
| Tall Oil | 40 |

which is significantly more economical than the top layer cement. The cement was prepared using the same procedures as in Example 3A.

The lower layer cement was then mixed with other lower layer components in the following proportions:

| Lower Layer Composition | % w/w |
|---|---|
| Lower Layer Cement | 35 |
| Wood flour | 12 |
| Chalk Powder | 24 |
| Recycled Linoleum | 25 |
| Pigment | 4 |

Thus in this case a somewhat lower amount of cement was used and a significant amount of recycled scrap linoleum floor covering e.g. edge trimmings, was incorporated, for reasons of economy.

The lower layer composition components were mixed together and formed into granules substantially as described in Example 1A.

### C. Application of Linoleum Compositions to Carrier

The granulated lower layer composition was applied to a carrier as described in Example 1C followed by the granulated top (wear) layer composition to produce a green linoleum floor covering with a 1.25 mm thick top (wear) layer and a 1.25 mm thick lower layer, which was then cured as before.

## Claims

1. A dimensionally stable, curl resistant natural linoleum floor-covering (14) suitable for use in sheet or tile form and comprising a carrier; a first layer (4) of the cured linoleum composition adherently attached at one side of the said carrier (6), and a second layer (11) of cured linoleum composition adherently attached at the other side of said carrier (6), wherein the linoleum composition comprises an oxidised polyunsaturated oil, an organic filler and/or inorganic filler, and optionally a pigment, wherein no cupren is present in said linoleum composition.

2. A floor-covering according to claims 1, wherein said carrier is a natural or synthetic carrier other than a carrier of moisture permeable jute fibres.

3. A floor-covering according to claim 2 wherein said carrier is of a synthetic fibre.

4. A floor-covering according to claim 3 wherein said synthetic fibre is selected from polyester, polyamide, polyacrylate and glass fibre.

5. A floor-covering according to claim 4 wherein the carrier is of woven glass-fibre.

6. A floor-covering according to any one of claims 1 to 5 wherein said carrier (6) has substantially open structure so as to facilitate penetration of the linoleum compositions into and around the carrier.

7. A floor-covering according to any one of claims 1 to 6 wherein said carrier structure (6) is substantially porous so as to facilitate penetration of the linoleum compositions into and around the carrier structure.

8. A floor-covering according to any one of claims 1 to 7 wherein said first and second layers (4, 11) have a substantially similar thickness and composition.

9. A floor-covering according to any one of claims 1 to 8 wherein an upper, wear, side (4) one of said first and second layers (4, 11) has a composition with a greater wear resistance than the lower side (11).

10. A floor-covering according to any one of claims 1 to 9 wherein a lower side (11) one of said first and second layers (4, 11) has a greater filler content than the upper, wear, side one (4).

11. A floor-covering according to any one of claims 1 to 10 wherein said first and second layers (4, 11) are formed and arranged so as to provide a balanced resistance to at least one of curl and other dimensional distortion.

12. A floor-covering according to any one of claims 1 to 11 wherein said carrier (6) has an adhesive coating for promoting adhesion of the linoleum compositions thereto.

13. A method of manufacture of a linoleum floor-covering comprising the steps of:
providing a carrier (6);
applying a first layer (4) of a linoleum composition at a first side of said carrier (6);
applying a second layer (11) of a linoleum composition at a second side of said carrier (6); and
curing said first and second layers (4, 11) of linoleum composition so as to form a composite sheet (14) in which said first and second layers (4, 11) are bonded together, wherein the linoleum composition comprises an oxidised polyunsaturated oil, an organic filler and/or inorganic filler, and optionally a pigment, wherein no cupren is present in said linoleum composition.

14. A method according to claim 13 which includes the preliminary step of forming at least one of said first and second layers (4, 11) into a sheet prior to application thereof to a respective side of said carrier (6).

## Patentansprüche

1. Formstabiler, gegen Rollneigung widerstandsfähiger Bodenbelag (14) aus natürlichem Linoleum, welcher geeignet ist zum Verwenden in Form von Tafeln oder Platten, und welcher enthält: einen Träger; eine erste Schicht (4) der vulkanisierten Linoleumzusammensetzung, die klebend an eine Seite des besagten Trägers (6) befestigt wird sowie eine zweite Schicht (11) der vulkanisierten Linoleumzusammensetzung, die klebend an die andere Seite des Trägers (6) befestigt wird, wobei die Linoleumzusammensetzung ein oxidiertes mehrfachungesättigtes Öl, einen organischen Füllstoff und/oder einen anorganischen Füllstoff und wahlweise ein Pigment enthält, wobei in der besagten Linoleumzusammensetzung kein Cupren enthalten ist.

2. Bodenbelag gemäß Anspruch 1, in dem der Träger ein natürlicher oder ein synthetischer Träger ist, außer einem Träger aus feuchtigkeitsdurchlässigen Jutefasern.

3. Bodenbelag gemäss Anspruch 2, in dem der Träger eine synthetische Faser ist.

4. Bodenbelag gemäss Anspruch 3, in dem die synthetische Faser ausgewählt wird unter Polyester, Polyamid, Polyacrylat und Glasfasern.

5. Bodenbelag gemäss Anspruch 4, in dem der Träger eine gewebte Glasfaser ist.

6. Bodenbelag gemäss irgendeinem der Ansprüche 1 bis 5, in dem der Träger (6) eine im Wesentlichen lose gewebte Struktur besitzt, um so das Eindringen der Linoleumzusammensetzungen in und um den Träger herum zu vereinfachen.

7. Bodenbelag gemäss irgendeinem der Ansprüche 1 bis 6, in dem die Trägerstruktur (6) im Wesentlichen porös ist, um so das Eindringen der Linoleumzusammensetzungen in und um die Trägerstruktur herum zu vereinfachen.

8. Bodenbelag gemäss irgendeinem der Ansprüche 1 bis 7, in dem die erste und die zweite Schicht (4, 11) im Wesentlichen eine vergleichbare Dicke und Zusammensetzung besitzen.

9. Bodenbelag gemäss irgendeinem der Ansprüche 1 bis 8, in dem eine obere, abnutzende erste Seite (4) aus den genannten ersten und zweiten Schichten (4, 11) eine Zusammensetzung aufweist, die eine größere Verschleißfähigkeit besitzt wie diejenige der unteren Seite (11).

10. Bodenbelag gemäss irgendeinem der Ansprüche 1 bis 9, in dem eine untere erste Seite (11) aus den genannten ersten und zweiten Schichten (4, 11) einen höheren Füllstoffgehalt besitzt als die obere, abnutzende Seite (4).

11. Bodenbelag gemäss irgendeinem der Ansprüche 1 bis 10, in dem die erste und die zweite Schicht (4,11) derart gebildet und angeordnet sind, dass sie eine ausgeglichene Widerstandfähigkeit bereitstellen gegen mindestens eine der Eigenschaften der Rollneigung und einer anderen dimensionellen Verformung.

12. Bodenbelag gemäss irgendeinem der Ansprüche 1 bis 11, in dem der Träger (6) eine Haftbeschichtung zum Fördern der Haftung der Linoleumzusammensetzungen auf demselben besitzt.

13. Verfahren zum Herstellen eines Bodenbelags aus Linoleum, welches folgende Schritte enthält:
Bereitstellen eines Trägers (6);
Auftragen einer ersten Schicht (4) einer Linoleumzusammensetzung auf einer ersten Seite des genannten Trägers (6);
Auftragen einer zweiten Schicht (11) einer Linoleumzusammensetzung auf einer zweiten Seite des Trägers (6); und
Vulkanisieren der ersten und der zweiten Schicht (4, 11) der Linoleumzusammensetzung, um so eine Verbundstofftafel (14) zu bilden, in welcher die erste und die zweite Schicht (4, 11) miteinander verbunden sind, wobei die Linoleumzusammensetzung ein oxidiertes mehrfachungesättigtes Öl, einen organischen Füllstoff und/oder einen anorganischen Füllstoff und wahlweise ein Pigment enthält, wobei in der Linoleumzusammensetzung kein Cupren enthalten ist.

14. Verfahren gemäss Anspruch 13, welches den vorbereitenden Schritt enthält, gemäß welchem mindestens eine der genannten ersten und zweiten Schicht (4, 11) zu einer Tafel geformt wird, bevor dieselbe auf eine entsprechende Seite des Trägers (6) aufgebracht wird.

## Revendications

1. Revêtement de sol en linoléum naturel (14), stable du point de vue dimensionnel, résistant au roulage, approprié pour une utilisation sous une forme de feuille ou de dalle et comprenant un support; une première couche (4) de composition durcie de linoléum fixée de manière adhésive sur un côté dudit support (6); et une seconde couche (11) de composition durcie de linoléum fixée de manière adhésive sur l'autre côté dudit support (6), dans lequel la composition de linoléum comprend une huile polyinsaturée oxydée, une charge organique et/ou une charge inorganique, et éventuellement un pigment, dans lequel il n'y a pas de cuprène présent dans ladite composition de linoléum.

2. Revêtement de sol suivant la revendication 1, dans lequel ledit support est un support naturel ou synthétique autre qu'un support de fibres de jute perméable à l'humidité.

3. Revêtement de sol suivant la revendication 2, dans lequel ledit support est constitué d'une fibre synthétique.

4. Revêtement de sol suivant la revendication 3, dans lequel ladite fibre synthétique est choisie à partir d'un polyester, d'un polyamide, d'un polyacrylate et d'une fibre de verre.

5. Revêtement de sol suivant la revendication 4, dans lequel le support est constitué de fibres de verre tissées.

6. Revêtement de sol suivant l'une quelconque des revendications 1 à 5, dans lequel ledit support (6) présente une structure substantiellement ouverte de manière à faciliter la pénétration des compositions de linoléum à l'intérieur et autour du support.

7. Revêtement de sol suivant l'une quelconque des revendications 1 à 6, dans lequel ladite structure du support (6) est substantiellement poreuse de manière à faciliter la pénétration des compositions de linoléum à l'intérieur et autour de la structure du support.

8. Revêtement de sol suivant l'une quelconque des revendications 1 à 7, dans lequel lesdites première et seconde couches (4, 11) possèdent une épaisseur et une composition substantiellement similaires.

9. Revêtement de sol suivant l'une quelconque des revendications 1 à 8, dans lequel un côté d'usure supérieur (4) parmi lesdites première et seconde couches (4, 11) présente une composition avec une résistance à l'usure supérieure à celle du côté inférieur (11).

10. Revêtement de sol suivant l'une quelconque des revendications 1 à 9, dans lequel un côté inférieur (11) parmi lesdites première et seconde couches (4, 11) présente une teneur en charge supérieure à celle du côté d'usure supérieur (4).

11. Revêtement de sol suivant l'une quelconque des revendications 1 à 10, dans lequel lesdites première et seconde couches (4, 11) sont formées et agencées de manière à fournir une résistance équilibrée à au moins une opération entre un roulage et une autre distorsion dimensionnelle.

12. Revêtement de sol suivant l'une quelconque des revendications 1 à 11, dans lequel ledit support (6) présente un revêtement adhésif pour favoriser l'adhérence des compositions de linoléum sur celui-ci.

13. Procédé de fabrication d'un revêtement de sol en linoléum comprenant les étapes consistant:
à fournir un support (6);
à appliquer une première couche (4) d'une composition de linoléum sur un premier côté dudit support (6);
à appliquer une seconde couche (11) d'une composition de linoléum sur un second côté dudit support (6); et
à durcir lesdites première et seconde couches (4, 11) de composition de linoléum de manière à former une feuille composite (14) dans laquelle lesdites première et seconde couches (4, 11) sont liées ensemble, dans laquelle la composition de linoléum comprend une huile polyinsaturée oxydée, une charge organique et/ou une charge inorganique, et éventuellement un pigment, dans laquelle il n'y a pas de cuprène présent dans ladite composition de linoléum.

14. Procédé suivant la revendication 13, qui inclut l'étape préliminaire consistant à transformer au moins une desdites première et seconde couches (4, 11) en une feuille avant d'appliquer celle-ci sur un côté respectif dudit support (6).
